# EUROPÄISCHE PATENTANMELDUNG

(11) **EP 4 556 257 A1**
(43) Veröffentlichungstag der Anmeldung: **21.05.2025**
(21) Anmeldenummer: 24213727.1
(22) Anmeldetag: 18.11.2024
(51) Int. Cl.: B60B 21/12

(54) **FELGENEINLAGESYSTEM UND DICHTELEMENT FÜR FAHRRÄDER**

(30) Priorität: 20.11.2023 DE 102023132273; 07.02.2024 DE 102024103376; 07.08.2024 DE 202024104448 U
(71) Anmelder: HYDROPHON Kunststofftechnik GmbH, 57399 Kirchhundem (DE)
(72) Erfinder: Hille, Thomas, 57399 Kirchhundem (DE)
(74) Vertreter: Beckmann, Jürgen

(57) **Zusammenfassung**

Die Erfindung betrifft ein Felgeneinlagesystem zum Abdecken der Innenschale der Felge (F) eines Rades, welches ein Felgenband (FB) mit einer Polsterschicht und einer darauf angeordneten Deckschicht aufweist. Die Polsterschicht ist vorzugsweise aus einem Schaumkunststoff und einseitig selbstklebend. Die Deckschicht kann beispielsweise Aluminium enthalten. Ferner kann das System eine Ventilmembran (VM) zum Abdichten eines Ventils (V) aufweisen.

## Beschreibung

Die Erfindung betrifft ein Felgeneinlagesystem zum Abdecken der Innenschale der Felge eines Rades sowie ein Dichtelement für ein Rad, welche insbesondere bei Fahrrädern eingesetzt werden können.

Bei Fahrrädern, Motorrädern und anderen Fahrzeugen ist es bekannt, auf einer starren Felge einen mit Druckluft gefüllten Reifen anzuordnen, über welchen die Rollbewegung gefedert erfolgt. Der Reifen kann dabei aus einem gasdichten Schlauch bestehen, welcher von einem C-förmigen Mantel und der Felge umgeben ist. Ferner sind auch schlauchlose ("tubeless") Reifen bekannt, welche keinen Schlauch enthalten und bei denen die Felge und der Mantel gemeinsam den gasdichten Druckluftraum bilden. Problematisch bei den bekannten Reifen ist, dass es immer wieder zu einem Druckluftverlust durch Undichtigkeiten kommen kann.

Vor diesem Hintergrund war es Aufgabe der vorliegenden Erfindung, Mittel zur Erhöhung der Nutzungsdauer eines Rades mit einer Felge bereitzustellen.

Diese Aufgabe wird durch ein Felgeneinlagesystem mit den Merkmalen von Anspruch 1, durch ein Dichtelement nach Anspruch 11, sowie durch Räder gemäß Anspruch 10, 12 und 13 gelöst. Vorteilhafte Ausgestaltungen sind in den Unteransprüchen enthalten.

Das erfindungsgemäße Felgeneinlagesystem dient der Abdeckung der Innenschale der Felge eines Rades, beispielsweise (aber nicht ausschließlich) der Felge eines Fahrrades, insbesondere eines Fahrrades mit schlauchlosen Reifen. Das Felgeneinlagesystem enthält als eine (gegebenenfalls einzige) Komponente ein Felgenband, welches eine Polsterschicht und eine darauf (unmittelbar oder mittelbar über weitere Zwischenschichten) angeordnete Deckschicht enthält.

Wie der Name "Band" andeutet, ist das Felgenband in seiner geometrischen Form im Wesentlichen streifenförmig mit einer großen Länge im Vergleich zur Breite sowie mit einer im Verhältnis zur Breite und Länge geringen Dicke. Die Länge des Felgenbandes entspricht im montierten Zustand typischerweise dem Kreisumfang der Felge, und die Breite des Felgenbandes liegt typischerweise zwischen ca. 30% und 100% der Breite der Felge. Die Dicke des Felgenbandes beträgt typischerweise zwischen ca. 0,1 mm und 5 mm.

Die Polsterschicht des Felgenbandes dient dazu, Unebenheiten auf der Oberfläche der Felge auszugleichen, wie sie beispielsweise durch an der Felge ansetzende Speichen erzeugt werden. Die Polsterschicht ist dabei vorzugsweise in Richtung ihrer Dicke elastisch.

Die Deckschicht auf der Polsterschicht sorgt für eine ausreichende Stabilität des Felgenbandes, da die Polsterschicht typischerweise verhältnismäßig weich ist. Die Deckschicht kann dabei zum einen dafür sorgen, dass das Felgenband seine geometrische Form im Wesentlichen beibehält. Des Weiteren kann die Deckschicht einen Perforationsschutz bieten, welcher beispielsweise verhindert, dass scharfkantige Enden von Speichen oder dergleichen das Felgenband durchstoßen können. Auf diese Weise kann das Felgenband bei einem Reifen mit Schlauch die Gefahr von Beschädigungen des Schlauches verringern.

Vorzugsweise ist das Felgenband gasdicht ausgebildet, beispielsweise indem die Polsterschicht und/oder die Deckschicht gasdicht ist. Das Felgenband kann daher eventuelle Undichtigkeiten in der Felge, die beispielsweise durch Schweißnähte, Speichenansätze oder dergleichen entstehen können, abdichten. Eine solche Dichtungsfunktion ist insbesondere wichtig, wenn das System bei einem schlauchlosen Reifen eingesetzt wird.

In einer beispielhaften Ausgestaltung kann die Polsterschicht einen Schaumkunststoff enthalten (und gegebenenfalls ganz hieraus bestehen). Dabei kann es sich insbesondere um einen geschlossenzelligen Schaumkunststoff handeln, wobei der Kunststoff beispielsweise ein Polyolefin wie Polyethylen (PE), Polypropylen (PP) oder dergleichen ist. Geeignete Ausbildungen des Schaumkunststoffs sind in der EP 3 256 655 B1 zu finden, welche durch Bezugnahme vollständig in die vorliegende Anmeldung aufgenommen wird.

Damit das Felgenband eine stabile Position innerhalb der Felge annimmt, kann die Polsterschicht an ihrer Außenseite (die der Felge zugewandt wird) selbstklebend ausgebildet sein (auf der gesamten Fläche oder auf Teilen der Fläche). Derartige Eigenschaften lassen sich entweder durch Verwendung eines Klebermaterials für die Polsterschicht erreichen oder durch die Aufbringung einer zusätzlichen Klebeschicht auf der Außenseite der Polsterschicht. Vor der Montage ist dabei die klebende Seite der Polsterschicht vorzugsweise durch eine Abziehfolie geschützt.

Falls auf der Polsterschicht eine zusätzliche Klebeschicht angeordnet ist, weist diese vorzugsweise eine verhältnismäßig hohe Belagsdichte auf. Diese beträgt beispielsweise über 50 g/m², besonders bevorzugt über 75 g/m², über 100 g/m², oder sogar über 150 g/m². Die Klebeschicht ist vorzugsweise feuchtigkeitsbeständig und kann beispielsweise trägerlosen Kautschuk, Butyl, UV-vernetztes Acrylat, Acrylicfoam oder Reinacrylat enthalten.

Für die Ausbildung der Deckschicht gibt es verschiedene Möglichkeiten. Insbesondere kann diese Schicht einen Kunststoff (z.B. eine PE-Folie), Papier, oder ein Metall wie beispielsweise Aluminium enthalten (und gegebenenfalls ganz hieraus bestehen). Die Dicke einer Metallschicht liegt dabei typischerweise zwischen ca. 0.01 und ca. 1.0 Millimetern. Zusätzlich oder alternativ kann die Deckschicht auch ein Vlies enthalten, insbesondere ein Kunststofffaservlies. Vorzugsweise weist ein solches Vlies eine hohe Dehnbarkeit in allen Richtungen auf ("Stretch-Vlies"), damit sich das Felgenband gut an Konturen anpassen lässt. Ein geeignetes Material wird diesbezüglich in der DE 10 2021 131 532 A1 beschrieben, welche durch Bezugnahme vollständig in die vorliegende Anmeldung aufgenommen wird.

Das Felgeneinlagesystem kann als optionale weitere Komponente eine Ventilmembran umfassen, welche ein (vorzugsweise elastisch umrandetes) Durchgangsloch zur Aufnahme eines Ventils aufweist. Vorteilhafterweise ist der Durchmesser des Durchgangsloches im Grundzustand dabei geringer als der Durchmesser des aufzunehmenden Ventiles. Das Ventil kann dann unter elastischer Verbreiterung des Durchgangsloches in dieses eingesteckt werden, sodass es von der Ventilmembran dichtend umschlossen wird. Die Ventilmembran ist vorzugsweise gasdicht und kann somit den Durchgang des Ventils durch die Felge abdichten.

Vorzugsweise ist die vorstehend erwähnte Ventilmembran einseitig selbstklebend ausgebildet, beispielsweise indem sie aus einem Klebermaterial gebildet wird oder auf einer Seite eine zusätzliche Klebeschicht aufweist. Eine derartige selbstklebende Ventilmembran kann einfach und dauerhaft an der Felge fixiert werden. Vor der Montage ist die klebende Seite der Ventilmembran vorzugsweise durch eine Abziehfolie geschützt. Diese kann optional durch eine das Durchgangsloch enthaltende Trennlinie in zwei Teile geteilt sein, sodass die Ventilmembran schrittweise (erst "rechts", dann "links" des Ventils) durch Kleben befestigt werden kann.

Mit den oben beschriebenen Komponenten wird typischerweise das Felgenband um fast 360° umlaufend in die Innenschale der Felge geklebt, wobei um das Ventil-Durchgangsloch herum ein mehr oder weniger kurzer Abschnitt frei von Felgenband bleibt. In diesem Abschnitt wird wie vorstehend beschrieben das Ventil montiert und mithilfe der Ventilmembran abgedichtet. Da die Ventilmembran in der Regel eine andere Höhe (Dicke) hat als das Felgenband, kann auf diese Weise allerdings ein Höhensprung im Bereich des Ventil-Durchgangsloches entstehen. Diesbezüglich ist es bevorzugt, wenn das Felgeneinlagesystem optional zusätzlich (mindestens) ein Ausgleichselement umfasst für eine Höhenanpassung der Umgebung des Ventil-Durchgangsloches an das in der Felge angebrachte Felgenband. Die Höhenpassung kann dabei insbesondere in einer (ungefähren) Angleichung der Höhen (Dicken) des Felgenbandes und des Bereichs um das Durchgangsloch bestehen. Das Ausgleichselement kann beispielsweise einen Schaumstoff enthalten oder hieraus bestehen. Vorzugsweise weist es ein vorbereitetes Loch auf für die Aufnahme des Ventils. Weiterhin kann das Ausgleichselement optional einstückig mit der Ventilmembran ausgebildet sein.

Gemäß einer anderen Weiterbildung enthält das Felgeneinlagesystem als weitere Komponente ein Andrückwerkzeug, mit dessen Hilfe das Felgenband und/oder die Ventilmembran (falls vorhanden) und/oder das Ausgleichselement (falls vorhanden) unter Druck fest an der Felge angeklebt werden kann. Insbesondere kann durch das Andrückwerkzeug eine Blasenbildung bei der Montage verhindert werden, indem Lufteinschlüsse herausgedrückt werden. Das Andrückwerkzeug enthält zu diesem Zweck einen in etwa der Kontur der Felge angepassten Abschnitt und ist aus einem weichen, elastischen Material gebildet, welches Verletzungen des Felgenbandes bzw. der Ventilmembran verhindert. Das Andrückwerkzeug kann beispielsweise aus einem Schaumkunststoff (ähnlich wie oben für die Polsterschicht beschrieben) bestehen.

Die Erfindung betrifft weiterhin ein Rad, insbesondere für ein Fahrrad, welches die folgenden Komponenten enthält:
- Eine Felge mit einem Durchgangsloch für ein Ventil.
- Ein Ventil, welches in das Durchgangsloch der Felge gesteckt ist.
- Eine Ventilmembran, welche im Bereich des Ventils angeordnet ist und das Ventil dichtend umschließt.
- ein Felgenband, welches um die Felge umlaufend angeordnet ist und mit der Ventilmembran überlappt.

Ein derartiges Rad kann insbesondere mit einem Felgeneinlagesystem der oben erläuterten Art hergestellt werden. Für die weiteren Ausgestaltungen und Vorteile des Rades wird daher auf die obige Beschreibung verwiesen. Das Rad kann einen Schlauch und einen Mantel aufweisen, wobei das Ventil dann typischerweise integral mit dem Schlauch ausgebildet ist. Insbesondere kann es sich jedoch auch um ein Rad mit einem schlauchlosen Reifen handeln, bei welchem die Felge und der Mantel gemeinsam den gasdichten Druckluftraum bilden.

Des Weiteren kann das Rad optional ein Ausgleichselement enthalten, welches im Bereich des Ventils angeordnet ist und die Höhe dieses Bereichs an das Felgenband anpasst. Das Ausgleichselement kann dabei auf der Ventilmembran oder unter der Ventilmembran angeordnet sein.

Die Erfindung umfasst weiterhin ein Dichtelement für ein Rad, insbesondere (aber nicht ausschließlich) für ein Fahrrad. Das Dichtelement enthält eine gasdichte Polsterschicht, die einen Schaumkunststoff aufweist und (mindestens) eine Oberfläche hat, die selbstklebend ist, beispielsweise indem auf ihr eine Klebeschicht (KS) angeordnet ist. Das Dichtelement kann eine optionale Komponente eines Felgeneinlagesystems der oben beschriebenen Art darstellen.

Das Dichtelement hat typischerweise eine Größe von wenigen Quadratzentimetern, beispielsweise eine Größe zwischen ca. 2 cm² und ca. 30 cm². Es eignet sich insbesondere dazu, Problemstellen oder Defektstellen zu überdecken. So kann die Felge eines Fahrrades herstellungsbedingte lokale Strukturen aufweisen, beispielsweise Kanten und/oder eine Undichtigkeit im Bereich des Felgenstoßes, wo die beiden Enden des gebogenen Felgenmetalls zusammengefügt sind. Durch die Abdeckung einer solchen Struktur mit dem Dichtelement kann die Verletzung anderer Komponenten des Rades (z.B. Schlauch oder Mantel) vermieden bzw. eine vorhandene Undichtigkeit verschlossen werden. Ein weiterer Einsatzbereich des Dichtelementes besteht in der (vorübergehenden oder dauerhaften) Reparatur eines Defektes, beispielsweise eines Loches im Mantel oder Schlauch eines Fahrradreifens.

Die Polsterschicht und die selbstklebende Oberfläche des Dichtelementes können ähnlich wie beim oben erläuterten Felgeneinlagesystem ausgebildet sein. So kann die Polsterschicht einen Schaumkunststoff enthalten (und gegebenenfalls ganz hieraus bestehen), insbesondere einen geschlossenzelligen Schaumkunststoff aus z.B. einem Polyolefin (vgl. EP 3 256 655 B1).

Die Klebeschicht ist vorzugsweise feuchtigkeitsbeständig und kann beispielsweise trägerlosen Kautschuk, Butyl, UV-vernetztes Acrylat, Acrylicfoam oder Reinacrylat enthalten. Vorzugsweise ist der Kleber in einer verhältnismäßig hohe Belagsdichte von beispielsweise über 50 g/m², besonders bevorzugt über 75 g/m², über 100 g/m², oder sogar über 150 g/m² aufgetragen.

Optional kann das Dichtelement eine Deckschicht aufweisen von der Art, wie sie beim Felgenband beschrieben wurde.

Vor der Montage ist die selbstklebende Oberfläche vorzugsweise durch eine Abziehfolie geschützt.

Die Erfindung betrifft weiterhin ein Rad, insbesondere für ein Fahrrad, mit einer Felge.

Gemäß einer ersten Ausführungsform enthält die Felge dabei eine herstellungsbedingte lokale Struktur wie z.B. einen Felgenstoß, welche durch ein Dichtelement gemäß einer der oben beschriebenen Ausführungsformen bedeckt ist.

Gemäß einer zweiten Ausführungsform ist auf der Felge ein Mantel und/oder ein Schlauch angeordnet, der einen Defekt (insbesondere eine Undichtigkeit) aufweist, wobei ein Dichtelement gemäß einer der oben beschriebenen Ausführungsformen den Defekt bedeckt (und damit unschädlich macht).

Im Folgenden wird die Erfindung mithilfe der beigefügten Figuren anhand eines Ausführungsbeispiels näher erläutert. Dabei zeigt:
- Figur 1: einen schematischen Schnitt durch das Felgenband;
- Figur 2: eine Draufsicht der der Felge zugewandten Seite der Ventilmembran vor der Montage;
- Figur 3: eine Draufsicht eines Andrückwerkzeugs;

- Figur 4: das Ankleben eines Felgenbandes an einer Felge nach der Vormontage einer Ventilmembran;
- Figur 5: das Ankleben einer Ventilmembran an einer Felge nach der Vormontage eines Felgenbandes, dargestellt in drei aufeinanderfolgenden Arbeitsschritten;
- Figur 6: eine schematische perspektivische Ansicht eines Dichtelementes.

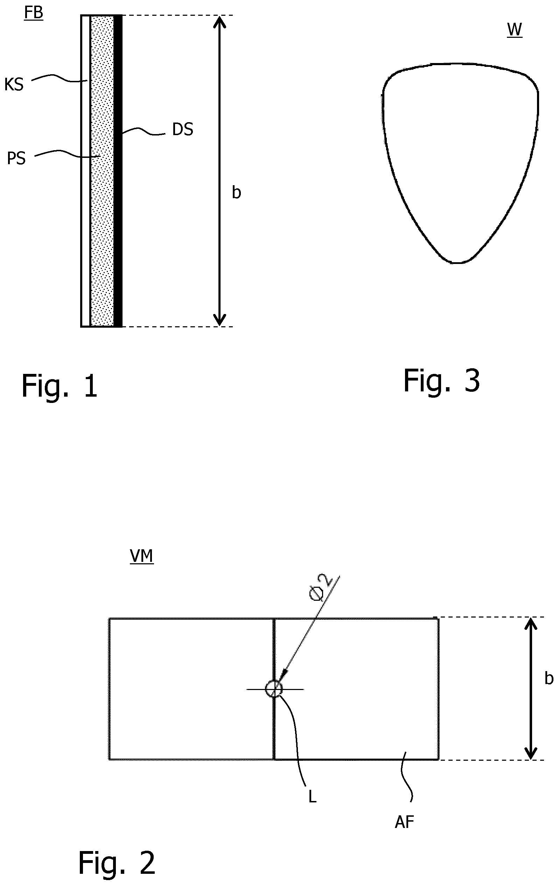

Das Felgeneinlagesystem des Ausführungsbeispiels enthält als eine wesentliche Komponente ein Felgenband FB, welches in Figur 1 in einem Schnitt (nicht maßstäblich) dargestellt ist. Das Felgenband gemäß dieser Ausführungsform enthält eine Polsterschicht PS mit einer darauf angeordneten Aluminiumfolie als Deckschicht DS. Die Deckschicht kann neben bzw. statt der Aluminiumfolie auch eine andere Metallschicht, Kunststoffschicht und/oder Papierschicht enthalten. Insbesondere kann die Deckschicht DS auch eine druckfeste Polyesterfolie enthalten oder hieraus bestehen. Die Oberflächenspannung einer solchen Folie beträgt vorzugsweise mehr als 28 mN/m, optional sogar mehr als 35 mN/m oder mehr als 40 mN/m.

Die der Deckschicht abgewandte Oberfläche der Polsterschicht PS ist vorzugsweise selbstklebend, was beispielsweise durch eine zusätzliche Klebeschicht KS erreicht werden kann. Die selbstklebende Oberfläche ist vor der Montage des Felgenbandes vorzugsweise durch eine Abziehfolie (nicht dargestellt) geschützt.

Die Polsterschicht PS kann insbesondere aus einem PE-Schaumkunststoff bestehen. Die Dicke des Verbundes aus Polsterschicht PS und Alufolie DS beträgt beispielsweise zwischen ca. 0.2 und 2 mm, insbesondere ca. 0.5 mm.

Die Klebeschicht KS sollte vorteilhafterweise feuchtigkeitsbeständig sein und kann beispielsweise trägerlosen Kautschuk, Butyl, UV-vernetztes Acrylat, Acrylicfoam oder Reinacrylat enthalten. Vorzugsweise wird der Kleber in einer verhältnismäßig großen Menge aufgetragen, beispielsweise von bis zu 200 g/m². Die Klebeschicht kann dann beispielsweise kleine Spalte in der Felge verschließen.

In einem typischen Ausführungsbeispiel liegt die Dicke des Felgenbandes FB bei ca. 0.7 mm (davon Deckschicht 0.1 mm, Polsterschicht 0.5 mm, Klebeschicht 0.1 mm, optionale Abziehfolie: 0.1 mm; alle Maße ± 10%). Die Deckschicht kann insbesondere eine druckfeste (optional silikonisierte) Polyesterfolie, die Polsterschicht ein PE-Schaumträger, die Klebeschicht ein Kautschukleber und die Abziehfolie eine silikonisierte Abdeckfolie sein. Der Kautschukleber kann gegebenenfalls auch ohne Abziehfolie sein.

Die Breite b des Felgenbandes FB wird entsprechend der Größe der Felge gewählt kann beispielsweise in den Abstufungen 17, 19, 21, 23, 25, 27 und 29 Millimetern vorliegen. Das Felgenband kann ferner endlos auf einer Rolle bereitgestellt werden, von welcher Stücke entsprechender Länge (gemäß dem Kreisumfang der Felge) abgeschnitten werden können. Optional kann es auch in der Radgröße entsprechenden Längen vorkonfektioniert werden.

Figur 2 zeigt in einer Draufsicht eine Ventilmembran VM, welche eine optionale weitere Komponente des Felgeneinlagesystems bildet. Die Ventilmembran VM ist im Wesentlichen rechteckig mit einer Breite b ungefähr entsprechend der Breite des Felgenbandes und einer Länge, welche etwa dem Doppelten bis Dreifachen der Breite entspricht und beispielsweise einen Wert von ca. 40 mm haben kann.

Die Ventilmembran VM kann beispielsweise aus einer vorzugsweise weichmacherfreien Polyurethanfolie bestehen, welche eine Elastizität aufweist. Mittig enthält die Ventilmembran ein kreisförmiges Durchgangsloch L von beispielsweise maximal ca. 3 mm, vorzugsweise ca. 2 mm Durchmesser, durch welches ein Ventil gesteckt werden kann. Aufgrund der Elastizität der Folie legt sich die Ventilmembran dabei dichtend an das Ventil an.

Eine Seite der Ventilmembran VM ist vorzugsweise selbstklebend ausgebildet, beispielsweise durch Aufbringung eines geeigneten Klebers. Dieser ist vor der Montage vorzugsweise durch eine Abziehfolie AF geschützt, wobei die Folie vorteilhafterweise mittig durch einen Schlitz in zwei Teile unterteilt ist.

Figur 3 zeigt in einer Draufsicht als weitere optionale Komponente des Felgeneinlagesystems ein Andrückwerkzeug W, welches in etwa die Form eines Fingernagels hat. Die Größe des Andrückwerkzeugs beträgt beispielsweise ca. 30 mm (an der Stelle maximaler Breite) mal 40 mm (an der Stelle maximaler Höhe). Das Andrückwerkzeug besteht beispielsweise aus einem PolyethylenSchaum mit einer Dicke von ca. 2 bis 10 mm, vorzugsweise von ca. 4 mm. Durch seine runde Spitze ist es der Form einer Felge angepasst und kann aufgrund seiner Weichheit bei der Montage des Felgenbandes FB oder der Ventilmembran VM verwendet werden, um die Klebeflächen fest an die Felge anzudrücken ohne das Produkt zu verletzen.

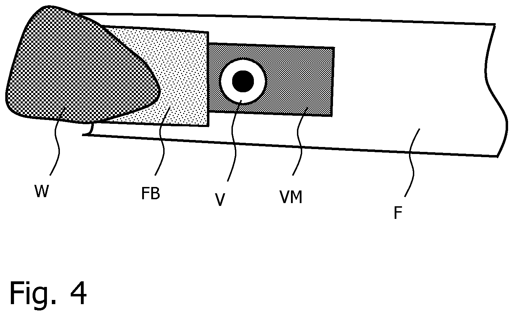

Das Zusammenspiel der vorstehend beschriebenen Komponenten ist in Figur 4 schematisch dargestellt. Figur 4 zeigt ein Stück einer Felge F mit (mindestens) einem Durchgangsloch, in welches bereits ein Ventil V eingesteckt ist. Das Ventil wurde dabei zuvor durch eine Ventilmembran VM gesteckt, welche im Bereich des Durchgangsloches auf die Felge F aufgeklebt ist. Die Ventilmembran überbrückt somit gasdicht den Ringspalt zwischen der Felge und dem Ventil.

In dem in der Figur dargestellten Schritt wird gerade ein Felgenband FB beginnend auf einer Seite des Ventils V auf die Ventilmembran VM aufgeklebt. Dieses wird danach (fast) 360° umlaufend in die Felge eingeklebt, bis es auf der anderen Seite des Ventils auf der Ventilmembran VM endet. Auf diese Weise wird eine die Speichen (nicht dargestellt) überdeckende und das Ventil einschließende Dichtung der Innenseite der Felge erreicht.

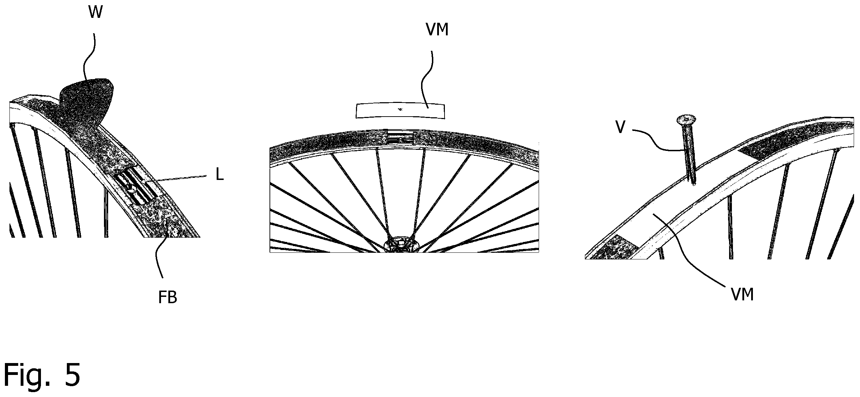

Wie in Figur 5 dargestellt ist, kann alternativ auch zuerst das Felgenband FB um etwas weniger als 360° umlaufend in die Felge eingeklebt werden, sodass ein Stück um das Durchgangsloch L herum frei bleibt (z.B. ca. 1 cm auf jeder Seite). Die Ventilmembran VM kann dann anschließend montiert und beidseitig (vorzugsweise ein oder mehrere Zentimeter überlappend) an das Felgenband angeklebt werden. Abschließend wird das Ventil V eingesteckt. Die Ventilmembran bildet dabei einen Wulst, der sich um das Ventil legt. Somit wird der Übergang zwischen Ventil und Felgeninnenwand abgedichtet.

Für das Ankleben der Ventilmembran und des Felgenbands an der Felge sollte diese zuvor gereinigt sein, so dass sie staub- und fettfrei ist. Das Felgenband wird in der Regel von einer Vorratsrolle entnommen und auf die erforderliche Länge abgelängt.

Typischerweise haben das Felgenband und die Ventilmembran unterschiedliche Dicken. Daher kann es im Bereich des Ventilloches zu einem Höhensprung innerhalb der Innenschale der Felge kommen. Um dies zu vermeiden, kann optional in diesem Bereich zusätzlich ein Ausgleichselement (nicht dargestellt) angebracht werden, beispielsweise ein Stück aus einem selbstklebenden Schaumstoff mit einem vorgestanzten Loch für die Durchführung des Ventils. Das Ausgleichselement kann sowohl unterhalb als auch oberhalb der Ventilmembran aufgeklebt werden und schließt vorzugsweise bündig an die Enden des Felgenbandes an. Bei der Montage kann beispielsweise zunächst das Ausgleichselement um das Ventilloch herum angeklebt werden und anschließend rechts und links bündig (auf Stoß) das Felgenband. Danach kann über das Ausgleichselement und vorzugsweise mit dem Felgenband überlappend die Ventilmembran aufgeklebt werden.

Das beschriebene System erweist sich insbesondere bei schlauchlosen Reifen als vorteilhaft. Bei diesen findet sich häufig eine (Aluminium-) Felge mit gesteckten Felgenstößen, welche trotz einer Verschweißung oft einen Spalt haben. Auch wenn dieser nur in der Größenordnung von einem Mikrometer liegt, führt er im Laufe der Zeit zu einem Druckverlust im Reifen. In der Praxis werden daher die Felgenstöße häufig mit Nagellack oder Sekundenkleber behandelt. Derartige Hilfsmaßnahmen sind bei dem beschriebenen Felgenband mit dem Schaumkleber-Verbund nicht mehr erforderlich, da dieses auch solche Kanäle schließt. Vorteilhafterweise setzt sich der Verbund aus Kleber/Schaumkunststoff/Alufolie beim Andrücken (anders als eine reine Folie) in die Vertiefungen und verklebt auch die Schnittkanten der Felge.

Des Weiteren zeigt sich in der Praxis, dass Räder mit dem beschriebenen Felgeneinlagesystem mit einer normalen Handpumpe aufgepumpt werden können und nicht unbedingt den Einsatz eines Boosters, Kompressors oder von Dichtmilch benötigen. Dies gelingt insbesondere durch Verwendung eines Ausgleichselements.

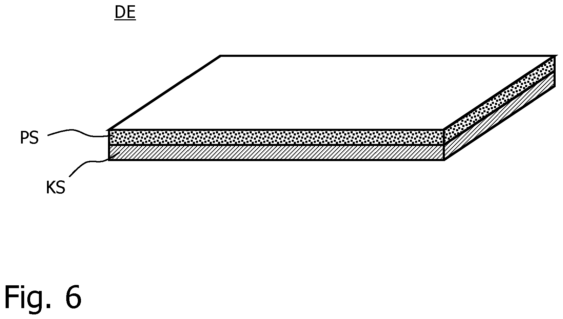

Als eine weitere ergänzende Komponente des beschriebenen Felgeneinlagesystems ist in Figur 6 ein Dichtelement DE in einer schematischen (nicht maßstäblichen) perspektivischen Ansicht dargestellt. Das Dichtelement DE gemäß dieser Ausführungsform enthält eine gasdichte Polsterschicht PS. Auf dieser kann optional wie beim Felgenband FB eine Deckschicht angeordnet sein, diese kann jedoch auch fehlen.

Eine Oberfläche der Polsterschicht PS ist selbstklebend, was beispielsweise durch eine zusätzliche Klebeschicht KS erreicht werden kann. Die selbstklebende Oberfläche ist vor der Montage des Felgenbandes vorzugsweise durch eine Abziehfolie (nicht dargestellt) geschützt.

Die Polsterschicht PS kann insbesondere aus einem PE Schaumkunststoff bestehen.

Das Dichtelement DE kann beispielsweise über die gesamte Breite des Felgenstoßes eines Rades geklebt werden, um Undichtigkeiten zu verschließen und scharfkantige Strukturen abzudecken. Ein solches "Felgenstoßpatch" hat vorzugsweise eine Gesamtdicke von ca. 0.2 mm und eine Größe von ca. 30 mm × 40 mm.

Weiterhin kann das Dichtelement im Rahmen einer vorübergehenden oder permanenten Reparatur auf ein Loch im Mantel oder Schlauch eines Fahrradreifens geklebt werden. Ein solches "Reparaturpatch" hat vorzugsweise eine Gesamtdicke von ca. 0.5 mm und eine ovale Form mit einem Durchmesser von ca. 30 bis 50 mm.

## Patentansprüche

1. Felgeneinlagesystem zum Abdecken der Innenschale der Felge (F) eines Rades, enthaltend ein Felgenband (FB) mit einer Polsterschicht (PS) und einer darauf angeordneten Deckschicht (DS).

2. Felgeneinlagesystem nach Anspruch 1,
**dadurch gekennzeichnet, dass** die Polsterschicht (PS) einen Schaumkunststoff enthält.

3. Felgeneinlagesystem nach Anspruch 1 oder 2,
**dadurch gekennzeichnet, dass** die Polsterschicht (PS) an ihrer Außenseite selbstklebend ist, insbesondere indem dort eine Klebeschicht (KS) angeordnet ist.

4. Felgeneinlagesystem nach mindestens einem der vorhergehenden Ansprüche,
**dadurch gekennzeichnet, dass** die Deckschicht (DS) eine Schicht aus Vlies, aus Metall, aus Kunststoff und/oder oder aus Papier umfasst.

5. Felgeneinlagesystem nach mindestens einem der vorhergehenden Ansprüche,
**dadurch gekennzeichnet, dass** es eine Ventilmembran (VM) umfasst mit einem Durchgangsloch (L) zur Aufnahme eines Ventils (V).

6. Felgeneinlagesystem nach Anspruch 5,
**dadurch gekennzeichnet, dass** die Ventilmembran (VM) selbstklebend ist, insbesondere indem sie eine Klebeschicht aufweist.

7. Felgeneinlagesystem nach mindestens einem der vorhergehenden Ansprüche,
**dadurch gekennzeichnet, dass** das Felgenband (FB) und/oder die Ventilmembran (VM) gasdicht ist.

8. Felgeneinlagesystem nach mindestens einem der vorhergehenden Ansprüche,
**dadurch gekennzeichnet, dass** es ein Ausgleichselement umfasst für eine Höhenanpassung der Umgebung eines Ventilloches.

9. Felgeneinlagesystem nach mindestens einem der vorhergehenden Ansprüche,
**dadurch gekennzeichnet, dass** es ein Andrückwerkzeug (W) zum Andrücken des Felgenbandes (FB) und/oder der Ventilmembran (VM) und/oder des Ausgleichselements an die Felge (F) enthält, welches im Wesentlichen die Kontur der Felge aufweist und aus einem weichen Material besteht.

10. Rad, umfassend
- eine Felge (F) mit einem Durchgangsloch für ein Ventil (V);
- ein Ventil (V), welches in das Durchgangsloch der Felge gesteckt ist;
- eine Ventilmembran (VM), welche im Bereich des Ventils angeordnet ist und das Ventil (V) dichtend umschließt;
- ein Felgenband (FB), welches um die Felge (F) umlaufend angeordnet ist und mit der Ventilmembran (VM) überlappt;
- optional ein Ausgleichselement, welches im Bereich des Ventils angeordnet ist und die Höhe dieses Bereichs an das Felgenband anpasst.

11. Dichtelement (DE) für ein Rad, enthaltend eine gasdichte Polsterschicht (PS), die einen Schaumkunststoff aufweist und eine Oberfläche hat, die selbstklebend ist.

12. Rad, umfassend
- eine Felge (F) mit einer herstellungsbedingten lokalen Struktur;
- ein Dichtelement (DE) nach Anspruch 11, welches die Struktur bedeckt.

13. Rad, umfassend
- eine Felge (F);
- einen auf der Felge (F) angeordneten Mantel und/oder Schlauch;
- ein Dichtelement (DE) nach Anspruch 11, welches einen Defekt am Mantel und/oder am Schlauch bedeckt.
